# EUROPEAN PATENT SPECIFICATION

(11) **EP 0 787 735 B1**
(45) Date of publication and mention of the grant of the patent: **09.08.2000**
(21) Application number: 97300517.6
(22) Date of filing: 28.01.1997
(51) Int. Cl.: C07F 7/08, C07F 7/18

(54) **Process for the preparation of beta-alkenyltrimethylsilanes**
Verfahren zur Herstellung von Beta-Alkenyltrimethylsilane
Procédé de préparation de bêta-alkènyltriméthylsilanes

(30) Priority: 31.01.1996 US 594963
(43) Date of publication of application: 06.08.1997
(73) Proprietor: DOW CORNING CORPORATION, Midland Michigan 48686-0994 (US)
(72) Inventor: Bank, Howard Marvin, Freeland, Michigan 48623 (US); Nguyen, Binh Thanh, Midland, Michigan 48640 (US)
(74) Representative: Hall, Marina

(56) References cited:
- FR-A- 2 163 579
- BULLETIN OF THE CHEMICAL SOCIETY OF JAPAN, vol. 57, 1984, pages 607-608, XP002030566 URATA, H. ET AL.: "CATALYTIC CONVERSION OF ALLYLIC ESTERS TO CORRESPONDING ALLYLIC SILANES WITH HEXAMETHYLDISILANE AND PALLADIUM(0) OR RHODIUM(i) COMPLEXES"
- THE JOURNAL OF ORGANIC CHEMISTRY, vol. 58, 1993, pages 3607-3608, XP002030567 TSUJI, Y. ET AL.: "PALLADIUM CATALYZED SILYLATION OF ALLYLIC ACETATES WITH HEXAMETHYLDISILANE OR (TRIMETHYLSILYL)TRIBUTYLSTANNANE"

## Description

The present invention is a process for making β-alkenyltrimethylsilanes and trimethylsilyl carboxylates. This process comprises contacting a mixture of hexamethyldisilane and an alkene carboxylate, having a β-unsaturated carbon atom, with novel organo-palladium or organo-nickel complexes as catalysts, at a temperature within a range of 100°C. to 250°C. Our process is especially useful for making allyltrimethylsilane and trimethylsilyl acetate.

β-alkenyltrimethylsilanes and trimethylsilyl carboxylates are useful intermediates for introducing organofunctional silicon functionalities into silicone and organic polymers. The present method provides a means for converting hexamethyldisilane to these intermediates in near quantitative yield.

Urata et al., Bull. Chem. Soc. Jpn. 57:607-608 (1984) teach that allylic esters react with hexamethyldisilane in the presence of catalytic amounts of Pd(PPh₃)₄, Pd{P(OPh)₃}₄ or RhCl(PPh₃)₃ (where Ph=phenyl) to give the corresponding allylic silanes in good yield. Urata et al. reported that Pd{P(OPh)₃}₄ effectively catalyzed the reaction of allyl acetate with hexamethyldisilane to give an excellent yield of β-alkenyltrimethylsiloxane. However, Pd(PPh₃)₄ and RhCl(PPh₃)₃ caused significant formation of propylene and (E) 1-propenyltrimethylsilane resulting from the double-bond migration of allyltrimethylsilane.

We have discovered novel organo-palladium and organo- nickel complexes which serve as catalysts to effect the reaction between hexamethyldisilane and alkene acetates to form β-alkenyltrimethylsilanes and trimethylsilyl carboxylates, without experiencing the double-bond shift of Urata et al., supra.

The present invention is a process for making β-alkenyltrimethylsilanes and trimethylsilyl carboxylates. The process comprises contacting a mixture of hexamethyldisilane and an alkene carboxylate described by formula R¹ ₂C=C(R¹)-CH₂-0C(O)R² (1) with a catalyst described by formula (R$\frac{\text{3}}{\text{2}}$PPh)₂Pdx₂ (2) or (R³ ₃P)₂NiX₂ (3) at a temperature within a range of 100°C. to 250°C.; where each R¹ is independently selected from a group consisting of hydrogen atom, saturated hydrocarbon radical comprising 1 to 18 carbon atoms, aralkyls and aryls; R² is selected from a group consisting of saturated hydrocarbon radicals comprising 1 to 18 carbon atoms, aralkyls and aryls; each R³ is an independently selected alkyl comprising 1 to 8 carbon atoms; Ph is phenyl; and each X is an independently selected halogen atom selected from chlorine or bromine atoms.

The present process is conducted as a batch, semi-continuous or continuous process. The process is also conducted in standard type reactors suitable for retaining the feed materials under pressure.

The mixture of the present process comprises hexamethyldisilane. This hexamethyldisilane is made by any standard method known in the art. The hexamethyldisilane can also be a by-product of a process for making organohalosilanes where an organic halide is reacted with elemental silicon at an elevated temperature in the presence of a catalyst to form monosilanes. The hexamethyldisilane can further be part of a high-boiling mixture (>70°C.) resulting from the distillation of the product of the above process. The composition of such a high-boiling mixture is further described in U.S. Patent No. 5,430,168 and need not be further described herein.

The mixture of the present process further comprises an alkene carboxylate as described by formula (1). Each R¹ is independently selected from a group consisting of hydrogen atom, saturated monovalent hydrocarbon radical comprising 1 to 18 carbon atoms, aralkyls and aryls. In addition to hydrogen atoms, R¹ is an alkyl such as methyl, ethyl, propyl, tert-butyl, decyl and octadecyl; a cycloalkyl such as cyclopentyl and cyclohexyl; aralkyls such as benzyl, beta-phenylethyl and beta-phenylpropyl; and aryls such as phenyl, tolyl and naphthyl. Preferred is when R1 is hydrogen.

In formula (1), R² is selected from a group consisting of saturated monovalent hydrocarbon radicals comprising 1 to 18 carbon atoms, aralkyls and aryls. R² is any of those hydrocarbon radicals as described for R¹. Preferred is when R² is a saturated monovalent hydrocarbon radical comprising 1 to 6 carbon atoms. Most preferred is when R² is methyl. The preferred alkene carboxylate in the present process is allyl acetate.

The mole ratio of alkene carboxylate to hexamethyldisilane added to our process is within a range of 0.1:1 to 10:1. It is preferred that the alkene carboxylate be added to our process in a stoichiometric excess in relation to the amount of hexamethyldisilane added. Preferred is when the mole ratio of alkene carboxylate to hexamethyldisilane is within a range of 1:1 to 3:1.

The mixture comprising the hexamethyldisilane and alkene carboxylate is contacted with a catalyst as described by formula (2) or (3). In formula (2) and (3), each substituent R³ is an independently selected alkyl comprising 1 to 8 carbon atoms. R³ is, for example, methyl, ethyl, propyl, tert-butyl, butyl, pentyl and octyl. Preferred is when R³ is methyl or ethyl. In formulas (2) and (3), each substituent X is a halogen independently selected from bromine or chlorine atoms. Preferred is when X is chlorine. Preferred catalysts for use in the claimed process are described by formulas (Me₂PPh)₂PdCl₂ and (Et₃P)₂NiCl₂, where Me is methyl, Et is ethyl and Ph is phenyl. This nomenclature will be used hereinafter in abbreviated form.

The concentration of catalyst added to the present process is that amount providing 1 X 10⁻² g·atom to 1 X 10⁻⁵ g·atom of palladium or nickel per mole of alkene carboxylate. Preferred is when the catalysts provides 5 X 10⁻³ g·atom to 5 X 10⁻⁴ g·atom of palladium or nickel.

In the present process, the mixture comprising the hexamethyldisilane and alkene carboxylate is contacted with the catalyst at a temperature within a range of 100 to 250°C. A preferred temperature range is 150 to 225°C.

The products of our process are β-alkenyltrimethylsilanes described by formula Me₃Si-CH₂-(R¹)C=CR¹ ₂ and trimethylsilyl carboxylates described by formula Me₃Si-OC(O)R², where R¹ and R² are as previously described. A preferred product of the present process is β-allyltrimethylsilane.

The following examples are provided to illustrate the present invention. These examples are not intended to limit the appended claims.

The reactions reported in the examples were conducted in sealed Pyrex™ glass tubes. A reaction mixture as described in each example was placed in the glass tube and cooled in an isopropyl alcohol (IPA) and dry ice bath. The tube was then heat sealed and heated at the temperature and time described for each example. After the described reaction period, the contents of the tube were cooled and analyzed by gas chromatography using a flame ionization detector (GC-FID). The results are reported as the area percent (area %) under the GC-FID trace. In the formulas of the examples Me is methyl and Ph is phenyl.

### Example 1

The reaction mixture comprised 0.29 g (0.003 mole) of Me₃SiSiMe₃, 0.3 g (0.004 mole) of allyl acetate and 0.0036 g of (Me₂PPh)₂PdCl₂. The mixture was heated at 150°C. for 21 hours, then cooled and analyzed by GC-FID. The analysis indicated the presence of no Me₃SiSiMe₃, 16.6 area % of allyl acetate, 47.0 area % of allylSiMe₃ and 34.0 area % of Me₃SiOC(O)CH₃.

### Example 2

The process described in Example 1 was repeated without the (Me₂PPh)₂PdCl₂ catalyst. No reaction occurred.

### Example 3

The reaction mixture comprised 0.29 g of Me₃SiSiMe₃, 0.3 g of allyl acetate and 0.004 g of (Et₃P)₂NiCl₂. The mixture was heated at 150°C. for 21 hours, then cooled and analyzed by GC-FID. The analysis indicated the presence of 37.7 area % Me₃SiSiMe₃, 31.6 area % allyl acetate, 15.2 area % allylSiMe₃ and 14.3 area % Me₃SiOC(O)CH₃.

### Example 4

The reaction mixture comprised 0.29 g of Me₃SiSiMe₃, 0.3 g of allyl acetate and 0.004 g of (Et₃P)₂NiCl₂. The mixture was heated at 200°C. for 21 hours, then cooled and analyzed by GC-FID. The analysis indicated the presence of 10 area % Me₃SiSiMe₃, 1.4 area % allyl acetate, 32.0 area % allylSiMe₃ and 47.5 area % Me₃SiOC(O)CH₃.

### Example 5

The process described in Example 4 was repeated without the (Et₃P)₂NiCl₂ catalyst. No reaction occurred.

## Claims

1. A process for making β-alkenyltrimethylsilanes and trimethylsilyl carboxylates comprises contacting a mixture comprising hexamethyldisilane and an alkene carboxylate described by formula R¹ ₂C=C(R¹)-CH₂-0C(O)R² with a catalyst described by formula (R$\frac{\text{3}}{\text{2}}$PPh)₂PdX₂ or (R³ ₃P)₂NiX₂, at a temperature within a range of 100 to 250°C.; where each R¹ is independently selected from a group consisting of hydrogen atom, saturated hydrocarbon radicals comprising 1 to 18 carbon atoms, aralkyls and aryls; R² is selected from a group consisting of saturated hydrocarbon radicals comprising 1 to 18 carbon atoms, aralkyls and aryls; each R³ is an independently selected alkyl comprising 1 to 8 carbon atoms; Ph is phenyl; and each X is an independently selected halogen atom selected from bromine or chlorine atoms.

2. A process according to claim 1 where the mixture comprises hexamethyldisilane present in a high-boiling mixture resulting from the distillation of a product of a process where an organic halide is reacted with elemental silicon at elevated temperatures to form monosilanes.

3. A process according to claim 1 or claim 2 where the alkene carboxylate is allyl acetate.

4. A process according to any of claims 1 to 3 where the mole ratio of alkene carboxylate to hexamethyldisilane in the mixture is within a range of 0.1:1 to 10:1.

5. A process according to any of claims 1 to 4 where each R3 is independently selected from methyl or ethyl.

6. A process according to any of claims 1 to 5 where the catalyst is selected from (Me₂PPh)₂PdCl₂ or (Et₃P)₂NiCl₂ where Me is methyl, Et is ethyl and Ph is phenyl.

7. A process according to any of claims 1 to 6 where the mixture comprises 1 X 10⁻² g·atom to 1 x 10⁻⁵ g·atom of palladium or nickel per mole of alkene carboxylate.

## Patentansprüche

1. Verfahren zur Herstellung von β-Alkenyltrimethylsilanen und Trimethylsilylcarboxylaten, umfassend Inkontaktbringen eine Mischung, die Hexamethyldisilan und ein Alkencarboxylat, das durch die Formel R¹₂C=C(R¹)-CH₂-OC(O)R² beschrieben wird, mit einem Katalysator, der durch die Formeln (R³₂PPh)₂PdX₂ oder (R³₃P)₂NiX₂ beschrieben wird, bei einer Temperatur innerhalb eines Bereichs von 100 bis 250°C, wobei jedes R¹ unabhängig voneinander ausgewählt ist aus einer Gruppe bestehend aus Wasserstoffatom, gesättigten Kohlenwasserstoffresten mit 1 bis 18 Kohlenstoffatomen, Aralkylgruppen und Arylgruppen, R² ausgewählt ist aus einer Gruppe bestehend aus gesättigten Kohlenwasserstoffresten mit 1 bis 18 Kohlenstoffatomen, Aralkylgruppen und Arylgruppen, jedes R³ unabhängig voneinander ausgewählt ist aus Alkylgruppen mit 1 bis 8 Kohlenstoffatomen, Ph Phenyl ist und jedes X ein unabhängig voneinander ausgewähltes Halogenatom, ausgewählt aus Brom- oder Chloratomen, ist.

2. Verfahren nach Anspruch 1, wobei die Mischung Hexamethyldisilan enthält, das in einer hochsiedenden Mischung vorliegt, die aus der Destillation eines Produkts aus einem Verfahren, worin ein organisches Halogenid mit elementarem Silicium bei erhöhten Temperaturen umgesetzt wird, um Monosilane zu bilden, stammt.

3. Verfahren nach Anspruch 1 oder 2, wobei das Alkencarboxylat Allylacetat ist.

4. Verfahren nach einem der Ansprüche 1 bis 3, wobei das Molverhältnis von Alkencarboxylat zu Hexamethyldisilan in der Mischung im Bereich von 0,1:1 bis 10:1 liegt.

5. Verfahren nach einem der Ansprüche 1 bis 4, worin jedes R³ unabhängig voneinander aus Methyl oder Ethyl ausgewählt ist.

6. Verfahren nach einem der Ansprüche 1 bis 5, wobei der Katalysator ausgewählt ist aus (Me₂PPh)₂PdCl₂ oder (Et₃P)₂NiCl₂, worin Me Methyl ist, Et Ethyl ist und Ph Phenyl ist.

7. Verfahren nach einem der Ansprüche 1 bis 6, wobei die Mischung 1 x 10⁻² Grammatome bis 1 x 10⁻⁵ Grammatome Palladium oder Nickel pro mol Alkencarboxylat enthält.

## Revendications

1. Procédé pour préparer des β-alcényltriméthylsilanes et des carboxylates de triméthylsilyle, qui comprend la mise en contact d'un mélange comprenant de l'hexaméthyldisilane et un carboxylate d'alcène représenté par la formule R¹₂C=C(R¹)-CH₂-OC(O)R² avec un catalyseur représenté par la formule (R³₂PPh)₂PdX₂ ou (R³₃P)₂NiX₂, à une température dans la gamme de 100 à 250 °C ; où chaque R¹ est indépendamment choisi dans le groupe constitué par l'atome d'hydrogène, les radicaux hydrocarbonés saturés comprenant 1 à 18 atomes de carbone, les groupes aralkyles et aryles ; R² est choisi dans le groupe constitué par les radicaux hydrocarbonés saturés comprenant 1 à 18 atomes de carbone, les radicaux aralkyles et aryles ; chaque R³ est un radical alkyle indépendamment choisi comprenant 1 à 8 atomes de carbone ; Ph est le groupe phényle ; et chaque X est un atome d'halogène indépendamment choisi parmi les atomes de brome et de chlore.

2. Procédé selon la revendication 1, dans lequel le mélange comprend de l'hexaméthyldisilane présent dans un mélange à haut point d'ébullition résultant de la distillation d'un produit provenant d'un procédé dans lequel un halogénure organique est mis à réagir avec du silicium élémentaire à des températures élevées pour former des monosilanes.

3. Procédé selon la revendication 1 ou la revendication 2, dans lequel le carboxylate d'alcène est l'acétate d'allyle.

4. Procédé selon l'une quelconque des revendications 1 à 3, dans lequel le rapport molaire du carboxylate d'alcène à l'hexaméthyldisilane dans le mélange est dans la gamme de 0,1:1 à 10:1.

5. Procédé selon l'une quelconque des revendications 1 à 4, dans lequel chaque R³ est indépendamment choisi parmi les groupes méthyle et éthyle.

6. Procédé selon l'une quelconque des revendications 1 à 5, dans lequel le catalyseur est choisi parmi (Me₂PPh)₂PdCl₂ et (Et₃P)₂NiCl₂ où Me est le groupe méthyle, Et est le groupe éthyle et Ph est le groupe phényle.

7. Procédé selon l'une quelconque des revendications 1 à 6, dans lequel le mélange comprend 1 x 10⁻² atome.g à 1 x 10⁻⁵ atome.g de palladium ou de nickel par mole de carboxylate d'alcène.
